Europäisches Patentamt

European Patent Office

Office européen des brevets

(11) Veröffentlichungsnummer: **0 242 832 B1**

## (12) EUROPÄISCHE PATENTSCHRIFT

(45) Veröffentlichungstag der Patentschrift: **21.11.91**

(51) Int. Cl.⁵: **C10L 1/32, B01F 17/00**

(21) Anmeldenummer: **87105776.6**

(22) Anmeldetag: **18.04.87**

Die Akte enthält technische Angaben, die nach dem Eingang der Anmeldung eingereicht wurden und die nicht in dieser Patentschrift enthalten sind.

(54) **Trübungsfreie Stabilisierung von Wasser in Kohlenwasserstofffraktionen des Diesel- bzw. Heizölbereichs.**

(30) Priorität: **25.04.86 DE 3614040**

(43) Veröffentlichungstag der Anmeldung:
**28.10.87 Patentblatt 87/44**

(45) Bekanntmachung des Hinweises auf die Patenterteilung:
**21.11.91 Patentblatt 91/47**

(84) Benannte Vertragsstaaten:
**BE DE FR GB IT**

(56) Entgegenhaltungen:
**EP-A- 0 147 506**
**WO-A-85/04183**
**DE-A- 2 653 026**

(73) Patentinhaber: **Henkel Kommanditgesellschaft auf Aktien**
**Postfach 1100 Henkelstrasse 67**
**W-4000 Düsseldorf-Holthausen(DE)**

(72) Erfinder: **Schmid, Karl-Heinz, Dr.**
**Stifterstrasse 10**
**W-4020 Mettmann(DE)**

## Beschreibung

Die Erfindung betrifft neue Möglichkeiten der Emulgierung und Stabilisierung beschränkter Wassermengen in Kohlenwasserstofffraktionen des täglichen Bedarfs, insbesondere in solchen Fraktionen des Diesel- bzw. Heizölbereichs.

Technische Kohlenwasserstofffraktionen der genannten Art enthalten bekanntlich beschränkte Wassermengen, die beispielsweise im Bereich von 0,5 bis 10 Gew.-% liegen können. Dies wird meist dadurch verursacht, daß in Leitungen oder Lagertanks herrührend von Spül- und Reinigungsoperationen noch geringe Wassermengen vorhanden sind, oder daß diese sich infolge der Luftfeuchtigkeit als Kondensationswasser in den Lagertanks bilden. Da Wasser in Diesel- bzw. Heizöl nur mit weniger als 0,5 Gew.-% löslich ist, treten mit größeren Wassermengen getrennte Phasen auf. In der Praxis ergeben sich hieraus bei der Lagerung von wasserhaltigen Diesel- und Heizöl unerwünschte Nebeneffekte wie z.B. die Korrosion der Lagertanks.

Die EP-A-0 147 506 betrifft ein Verfahren zur möglichst vollständigen Verbrennung von Brennstoffgemischen aus Öl und Wasser. Das angestrebte Ziel wird erreicht, indem man dem Brennstoffgemisch einen Alkylphenol-polyethylenglykolether, das heißt Additionsprodukte von Ethylenoxid an Alkylphenole, zusetzt. Als wichtigstes Alkylphenol wird in diesem Zusammenhang Nonylphenol genannt, das jedoch auch zusammen mit Octyl- und Dodecylphenol vorliegen kann. Die genannten Additive bedingen eine stabile Emulgierung der Brennstoffgemische. Derartige Brennstoffgemische enthalten vorzugsweise auf 100 Volumen-Teile Öl 1 bis 30 Volumen-Teile Wasser und 0,1 bis 0,6 Volumen-Teile des Additivs.

Demgegenüber geht die Erfindung von der Aufgabe aus, beschränkte Wassermengen der vorstehend genannten Größenordnung zuverlässig in Kohlenwasserstofffraktionen der genannten Art emulgieren und derart stabilisieren zu können, daß trübungsfreie klare einphasige Flüssigkeiten selbst dann vorliegen, wenn das Gut auf Temperaturen bis unterhalb des Gefrierpunktes, beispielsweise auf Temperaturen bis -5 bis -10 °C abgekühlt wird.

Die technische Lösung der Erfindung liegt in der Verwendung bestimmt ausgewählter Tensidgemische als Emulgatoren und/oder Stabilisatoren für die hier beschriebenen Wassergehalte der Kohlenwasserstofffraktionen des Diesel- bzw. Heizölbereichs.

Gegenstand der Erfindung ist dementsprechend die Verwendung eines mehrkomponentigen Tensidgemisches zur trübungsfreien Emulgierung und Stabilisierung von Wasser in Kohlenwasserstofffraktionen des Diesel- beziehungsweise Heizölbereichs, wobei das Tensidgemisch mindestens einen Alkylphenol-polyethylenglykolether mit 8 oder 9 C-Atomen im Alkylrest aufweist,
dadurch gekennzeichnet, daß das Tensidgemisch

a) wenigstens zwei Komponenten der Tensidklasse A, gewünschtenfalls in Abmischung mit Tensiden der Klassen B und/oder C, enthält, wobei gilt:
Tensidklasse A: Ethoxylate von Octylphenol, Nonylphenol und Isotridecylalkohol mit jeweils 1 bis 7 Ethylenoxideinheiten,
Tensidklasse B: Kokosalkohol-Ethoxylate mit 1 bis 7 Ethylenoxideinheiten,
Tensidklasse C: Oleylalkohol-Ethoxylate mit 1 bis 7 Ethylenoxideinheiten,
b) aus der Tensidklasse A Ethoxylate mit 3 Ethylenoxideinheiten in Abmischung mit Ethoxylaten mit 5 Ethylenoxideinheiten enthält,
c) eine Trübungstemperatur von 35 bis 70 °C - bestimmt nach DIN 53 917 (5 g Tensidgemisch in 25 g einer wäßrigen 25%igen Butyldiglykollösung) - aufweist.

Die nachstehend verwendete Abkürzung "EO" bedeuted "Ethylenoxideinheiten".

Es hat sich gezeigt, daß durch diese Auswahl der bestimmten Tensidklassen A, B und C in Verbindung mit der Festlegung der Hydrophilie des eingesetzten Tensidgemisches - bestimmt an der Trübungstemperatur nach DIN 53917 - eine Lösung der erfindungsgemäß gestellten Aufgabe erreicht wird.

Zwingend sieht die Erfindung den Einsatz eines Gemisches von wenigstens 2 Tensiden aus der Klasse A vor. Die Mitverwendung von Tensiden aus den Klassen B und/oder C kann wünschenswert sein, ist jedoch nicht erforderlich. Die geeignete Auswahl der jeweiligen Mischungskomponenten ist im Rahmen der angegebenen Stoffklassen durch einfache Untersuchungen des Trübungspunktes des jeweils zu verwendenden Tensidgemisches nach DIN 53917 möglich. Hier wird bekanntlich die Trübungstemperatur einer Lösung von 5 g des Tensids beziehungsweise Tensidgemisches in 25 g einer wäßrigen 25%igen Butyldiglykollösung (= Diethylenglykolmonobutylether) bestimmt. Dies erfolgt in der Weise, daß die Lösung der Probe bis über die vollständige Trübung hinaus erwärmt wird. Danach wird unter Rühren langsam abgekühlt. Als Trübungspunkt wird die Temperatur festgehalten, bei der die in der Mischung vorhandenen Trübungen unter Aufhellung und Bildung einer klaren beziehungsweise noch leicht opalescenten Lösung verschwinden.

Erfindungsgemäß soll die Trübungstemperatur der zur Emulgierung bzw. Stabilisierung eingesetzten Tensidgemische aus den Klassen A und gewünschtenfalls B und/oder C bevorzugt im Bereich von 40 bis 60 °C und insbesondere im Bereich von 45 bis 55 °C liegen.

Durch Auswahl und Zusammenstellung der erfindungsgemäß angegebenen Tensidkomponenten gelingt die sichere Emulgierung bzw. Stabilisierung des im Kohlenwasserstoffgemisch vorliegenden Wassergehaltes - der üblicherweise bis zu etwa 5 Gew.-% betragen kann - unter Mitverwendung von 0,5 bis 10 Gew.-% des Tensidgemisches zu klaren, beständigen Lösungen auch dann, wenn die wasserhaltigen Kohlenwasserstofffraktionen auf Temperaturen nur unterhalb der Raumtemperatur und sogar unterhalb von 0 °C gekühlt werden. Häufig beträgt der Wassergehalt der hier betroffenen Kohlenwasserstofffraktionen nicht mehr als etwa 3 Gew.-%. Hier können dann unter Mitverwendung von bis zu etwa 5 Gew.-%, insbesondere etwa 1 bis 5 Gew.-% der erfindungsgemäßen Tensidmischungen - jeweils bezogen auf 100 Gewichtsteile Diesel- bzw. Heizölfraktion - klare Lösungen hergestellt werden, die bei Temperaturen bis -4 °C und auch noch darunter unveränderte einphasige Beschaffenheit aufweisen. Die geschilderten Störanfälligkeiten in der praktischen Handhabung der hier betroffenen Kohlenwasserstofffraktionen sind damit für die praktischen Bedürfnisse des Alltags zuverlässig beseitigt.

Wie angegeben werden aus der Tensid-Klasse A wenigstens 2 Tenside in Mischung miteinander eingesetzt, wobei das Tensidgemisch Ethoxylate der genannten Art mit 3 EO in Kombination mit Ethoxylaten der genannten Art mit 5 EO enthält. Dabei kann Nonylphenolethoxylaten der genannten Art besondere Bedeutung zukommen.

Bevorzugte Tensidmischungen für die erfindungsgemäße Verwendung liegen innnerhalb der folgenden Bereiche:

| 20 bis 60 Gew.-% | Nonylphenol-3 EO |
|---|---|
| 20 bis 80 Gew.-% | Nonylphenol-5 EO |
| 0 bis 30 Gew.-% | Oleyl- und/oder Kokosalkohol-5 EO |

Die Tensidkomponente B basiert in der bevorzugten Ausführungsform auf einem Kokosalkohol der folgenden C-Kettenverteilung: $C_{12}$- 55 Gew.-%, $C_{14}$ - 25 Gew.-%, $C_{16}$- 10 Gew.-% und $C_{18}$- 10 Gew.-%.

Die Oleylalkoholbasis zur Tensidkomponente C kann Jodzahlen im Bereich von 40 bis 170 aufweisen.

Die erfindungsgemäß zur Wasserstabilisierung eingesetzten Tensidkomponenten sind wohlfeile Handelsprodukte. In der beabsichtigten Verwendung der entsprechend beladenen Kohlenwasserstofffraktionen - insbesondere bei der Verbrennung dieser Kohlenwasserstofffraktionen zur Energieerzeugung - stören diese Komponenten nicht.

## Beispiel

Unter Einsatz verschiedener Tensidgemische gemäß der Erfindung wird die Beschaffenheit von Diesel/Wasser-Mischungen beurteilt. Die nachfolgende Tabelle gibt die Zusammensetzung des Tensidgemisches, die Trübungstemperatur (DIN 53917) des Tensidgemisches und die Beurteilung der Emulsionsbeschaffenheit bei 20 °C bei der folgenden Grundrezeptur an:

| Diesel-Kohlenwasserstoffgemisch | 95 Gew.-% |
|---|---|
| erfindungsgemäße Tensidmischung | 4 Gew.-% |
| Wasser | 1 Gew.-% |

Tabelle

| Beispiele | Zusammensetzung des Tensidgemisches | Gew.-% | Trübungstempera-(DIN 53917) | Beurteilung der Emulsion bei 20 °C |
|---|---|---|---|---|
| 1. | Nonylphenol-3 EO<br>Nonylphenol-5 EO<br>Kokosalkohol-7 EO | 60<br>30<br>10 | 48 °C | klar |
| 2. | Nonylphenol-3 EO<br>Nonylphenol-5 EO<br>Kokosalkohol-5 EO | 50<br>30<br>20 | 47 °C | klar |
| 3. | Nonylphenol-3 EO<br>Nonylphenol-5 EO<br>Oleylalkohol-7 EO | 50<br>30<br>20 | 50 °C | klar |
| 4. | Nonylphenol-3 EO<br>Nonylphenol-5 EO<br>Oleylalkohol-5 EO | 25<br>25<br>50 | 57 °C | klar |

**Patentansprüche**

1. Verwendung eines mehrkomponentigen Tensidgemisches zur trübungsfreien Emulgierung und Stabilisierung von Wasser in Kohlenwasserstofffraktionen des Diesel- beziehungsweise Heizölbereichs, wobei das Tensidgemisch mindestens einen Alkylphenolpolyethylenglykolether mit 8 oder 9 C-Atomen im Alkylrest aufweist,

   dadurch gekennzeichnet, daß das Tensidgemisch

   a) wenigstens zwei Komponenten der Tensidklasse A, gewünschtenfalls in Abmischung mit Tensiden der Klassen B und/oder C, enthält, wobei gilt:
   Tensidklasse A: Ethoxylate von Octylphenol, Nonylphenol und Isotridecylalkohol mit jeweils 1 bis 7 Ethylenoxideinheiten,
   Tensidklasse B: Kokosalkohol-Ethoxylate mit 1 bis 7 Ethylenoxideinheiten,
   Tensidklasse C: Oleylalkohol-Ethoxylate mit 1 bis 7 Ethylenoxideinheiten,
   b) aus der Tensidklasse A Ethoxylate mit 3 Ethylenoxideinheiten in Abmischung mit Ethoxylaten mit 5 Ethylenoxideinheiten enthält,
   c) eine Trübungstemperatur von 35 bis 70 °C - bestimmt nach DIN 53 917 (5 g Tensidgemisch in 25 g einer wäßrigen 25%igen Butyldiglykollösung) - aufweist.

2. Verwendung nach Anspruch 1, dadurch gekennzeichnet, daß Kohlenwasserstofffraktionen eines Wassergehaltes bis zu etwa 5 Gew.-% unter Mitverwendung von 0,5 bis 10 Gew.-% des Tensidgemisches auch bei Temperaturen bis unterhalb des Gefrierpunktes zu klaren Lösungen stabilisiert sind.

3. Verwendung nach Anspruch 1 oder 2, dadurch gekennzeichnet, daß Tensidmischungen innerhalb der folgenden Bereiche vorliegen:
   20 bis 60 Gew.-% Nonylphenol mit 3 Ethylenoxideinheiten,
   20 bis 80 Gew.-% Nonylphenol mit 5 Ethylenoxideinheiten,
   0 bis 30 Gew.-% Oleyl- und/oder Kokosalkohol mit 5 Ethylenoxideinheiten.

4. Verwendung nach Ansprüchen 1 bis 3, dadurch gekennzeichnet, daß die eingesetzten Tensidgemische eine Trübungstemperatur (DIN 53 917) im Bereich von 40 bis 60 °C, vorzugsweise von 45 bis 55 °C, aufweisen.

5. Verwendung nach Ansprüchen 1 bis 4, dadurch gekennzeichnet, daß bei Wassergehalten bis zu 3 Gew.-% im Kohlenwasserstoffgemisch 1 bis 5 Gew.-% des Tensidgemisches vorliegen.

**Claims**

1. The use of a multicomponent surfactant mixture for the clouding-free emulsification and stabilization of water in hydrocarbon fractions of the diesel oil or fuel oil range, the surfactant mixture containing at least one alkylphenol polyethylene glycol ether containing 8 or 9 carbon atoms in the alkyl radical, characterized in that the surfactant mixture

   a) contains at least two components of surfactant class A, if desired in admixture with surfactants of classes B and/or C,
   surfactant class A including ethoxylates of octylphenol, nonylphenol and isotridecyl alcohol each containing 1 to 7 ethylene oxide units,
   surfactant class B including coconut oil alcohol ethoxylates containing 1 to 7 ethylene oxide units and
   surfactant class C including oleyl alcohol ethoxylates containing 1 to 7 ethylene oxide units,
   b) contains from surfactant class A ethoxylates containing 3 ethylene oxide units in admixture with ethoxylates containing 5 ethylene oxide units,
   c) has a cloud point of 35 to 70°C, as determined in accordance with DIN 53 917 (5 g surfactant mixture in 25 g of an aqueous 25% butyl diglycol solution).

2. The use claimed in claim 1, characterized in that hydrocarbon fractions containing up to 5% by weight water are stabilized to clear solutions with 0.5 to 10% by weight of the surfactant mixture, even at temperatures below freezing point.

3. The use claimed in claims 1 or 2, characterized in that the surfactant mixtures lie within the following ranges:

   20 to 60% by weight nonylphenol containing 3 ethylene oxide units,
   20 to 80% by weight nonylphenol containing 5 ethylene oxide units,
   0 to 30% by weight oleyl and/or coconut oil alcohol containing 5 ethylene oxide units.

4. The use claimed in claims 1 to 3, characterized in that the surfactant mixtures used have a cloud point (DIN 53917) of 40 to 60°C and preferably of 45 to 55°C.

5. The use claimed in claims 1 to 4, characterized in that, for water contents of up to 3% by weight, the hydrocarbon mixture contains 1 to 5% by weight of the surfactant mixture.

**Revendications**

1. Utilisation d'un mélange d'agents tensioactifs à plusieurs composants pour l'émultion exempte de trouble et la stabilisation d'eau dans des fractions d'hydrocarbures du domaine de fuel ou du mazout pour moteurs diesel, le mélange d'agents tensioactifs comportant au moins un éther d'alkylphénol-polyéthylèneglycol ayant 8 ou 9 atomes de carbone dans le radical alkyle, caractérisée en ce que le mélange d'agents tensioactifs,
   a) contient au moins deux composants de la classe d'agents tensioactifs A, si on le désire en mélange avec des agents tensioactifs des classes B et/ou C, étant entendu que :
   Classe d'agents tensioactifs A : produits d'oxyéthylation d'octylphénol, nonylphénol et alcool isotridécylique ayant chacun de 1 à 7 unités oxyde d'éthylène,
   Classe d'agents tensioactifs B : produits d'oxyéthylation d'alcool de coco ayant de 1 à 7 unités oxyde d'éthylène,
   Classe d'agents tensioactifs C : produits d'oxyéthylation d'alcool oléylique ayant de 1 à 7 unités oxyde d'éthylène,
   b) contient dans la classe d'agents tensioactifs A des produits d'oxyéthylation comportant 3 unités oxyde d'éthylène en mélange avec des produits d'oxyéthylation comportant 5 unités oxyde d'éthylène,
   c) présente une température de trouble de 35 à 70°C, mesurée selon DIN 53917 (5g de mélange d'agents tensioactifs dans 25g d'une solution aqueuse de butyldiglycol à 25 %).

2. Utilisation selon la revendication 1, caractérisée en ce que les fractions d'hydrocarbures, ayant une teneur en eau allant jusqu'à environ 5 % en poids, sont stabilisées en donnant des solutions limpides même à des températures jusqu'au-dessous du point de congélation, avec utilisation simultanée de 0,5 à 10 % en poids du mélange d'agents tensioactifs.

3. Utilisation selon la revendication 1 ou 2, caractérisée en ce que les mélanges d'agents tensioactifs se trouvent dans les plages suivantes :
   - de 20 à 60 % en poids de nonylphénol comportant 3 unités oxyde d'éthylène,
   - de 20 à 80 % en poids de nonylphénol comportant 5 unités oxyde d'éthylène,
   - de 0 à 30 % en poids d'alcool oléylique et/ou de coco comportant 5 unités oxyde d'éthylène.

4. Utilisation selon l'une quelconque des revendications 1 à 3, caractérisée en ce que les mélanges d'agents tensioactifs utilisés présentent une température de trouble (DIN 53917) dans la plage de 40 à 60°C, de préférence de 45 à 55°C.

5. Utilisation selon l'une quelconque des revendications 1 à 4, caractérisée en ce que dans le cas de teneurs en eau du mélange d'hydrocarbures allant jusqu'à 3 % en poids, sont présents de 1 à 5 % en poids du mélange d'agents tensioactifs.